# EUROPÄISCHE PATENTSCHRIFT

(11) **EP 2 243 731 B1**
(45) Veröffentlichungstag und Bekanntmachung des Hinweises auf die Patenterteilung: **18.09.2013**
(21) Anmeldenummer: 09005744.9
(22) Anmeldetag: 24.04.2009
(51) Int. Cl.: B65G 57/00

(54) **Vorrichtung zum schichtweisen Palettieren von Stückgutlagen**
Device for palletizing articles layer by layer
Dispositif de palettisation d'articles par couches

(43) Veröffentlichungstag der Anmeldung: 27.10.2010
(73) Patentinhaber: Krones AG, 93073 Neutraubling (DE)
(72) Erfinder: Perl, Kurt, 93073 Neutraubling (DE); Zeiner, Peter, 93073 Neutrabling (DE)

(56) Entgegenhaltungen:
- WO-A1-00/71448
- DE-A1-102007 063 286
- DE-U1- 20 021 874
- US-A1- 2008 095 601

## Beschreibung

Die Erfindung betrifft eine Vorrichtung zum schichtweisen Palettieren von Stückgutlagen gemäß dem Oberbegriff des Anspruchs 1.

Im Stand der Technik ist beim Palettieren von Stückgutlagen, beispielsweise bestehend aus Flaschengebindegruppen, die Verwendung von Zwischenlagen zwischen den einzelnen Stückgutlagen bekannt, um die Stabilität zu erhöhen.

Zu diesem Zweck ist herkömmlichen Palettiermaschinen eine Vorrichtung zum Entnehmen von vorgefertigten Zwischenlagen beigestellt (DE 20 2006 018 017 U1). Üblicherweise werden die geschnittenen Zwischenlagen in gestapelter Form an einem Aufgabeplatz bereitgehalten. Wenn ein solcher Zwischenlagenstapel aufgebraucht ist, muss er durch einen neuen Stapel ersetzt werden, der nach dem vorherigen Entfernen der leeren Palette zum Aufgabeplatz gebracht werden kann, beispielsweise durch einen Zuförderer oder einen Gabelstapler. Dieser Austauschvorgang erfordert eine kurze Betriebsunterbrechung der Palettiermaschine, die deren Ausbringleistung vermindert.

Aus WO 00/71448 A1 ist eine gattungsgemäße Vorrichtung zum Palettieren von Stückgut mit zwischenlagen bekannt. Die Vorrichtung verfügt über zwei Magazine für unerschiedlich ausgeprägte Zwischenlagen.

Der Erfindung liegt die Aufgabe zu Grunde, eine Lösung anzugeben, die demgegenüber eine Erhöhung der Ausbringleistung ermöglicht.

Gelöst wird diese Aufgabe durch die Merkmale des Anspruchs 1.

Durch die erfindungsgemäße Maßnahme, im Bereich der Palettiermaschine zwei voneinander beabstandete Aufgabeplätze für Zwischenlagen vorzusehen, besteht nunmehr die Möglichkeit, nach Verbrauch eines Zwischenlagenstapels ohne nennenswerte Verzögerung unverzüglich mit der Aufgabe von Zwischenlagen am zweiten Aufgabeplatz fortzufahren. Parallel zum Palettierbetrieb kann dann die zuvor freigewordene Palette entfernt und durch einen neuen Stapel mit Zwischenlagen ersetzt werden. Da im Normalfall neben dem zweiten vorzusehenden Aufgabeplatz für einen Zwischenlagenstapel lediglich der Verfahrweg bzw. Aktionsradius eines Zwischenlageneinlegers erhöht werden muss, entsteht im Wesentlichen kein nennenswerter Zusatzaufwand.

Erfindungsgemäß ist die Zwischenlagenaufgabeeinrichtung so ausgebildet, dass sie Zwischenlagen von einem Aufgabeplatz aufnimmt und im weiteren Verlauf auf einem benachbart angeordneten Zwischenlagenförderer ablegt, der die separierten Zwischenlagen der eigentlichen Palettiermaschine zuführt. Dies kann beispielsweise dadurch geschehen, dass der Zwischenlagenförderer die vereinzelten Zwischenlagen taktweise unter einen mit Halteeinrichtung für die Zwischenlagen ausgestatteten Palettierkopf zuführt, so dass mit dem Aufsetzen einer Stückgutlage auf einen Stapel gleichzeitig eine Zwischenlage mitgeführt und dabei zwischen die Stückgutlagen eingelegt wird.

Erfindungsgemäß sind die wenigstens zwei Zwischenlageaufgabeplätze an gegenüberliegenden Seiten des Zwischenlagenförderers angeordnet. Die Vorrichtung zum Entnehmen und Ablegen der Zwischenlagen ist als eine horizontale Verfahrachse ausgebildet, die sich vom ersten Aufgabeplatz über den Zwischenlagenförderer hinweg zum zweiten Aufgabeplatz erstreckt und eine zweite, dazu senkrecht angeordnete Verfahrachse zum Heben und Senken der Greifwerkzeuge für die Zwischenlagen aufweist.

Nachfolgend wird ein bevorzugtes Ausführungsbeispiel anhand einer Figur erläutert, die einen Teil einer Palettiermaschine in einer perspektivischen Ansicht zeigt.

Die Palettiermaschine P wird im Wesentlichen aus einer um eine lotrechte Achse drehbar gelagerten Zentralsäule S mit zwei um 180° umfänglich versetzt angeordneten Vertikalachsen gebildet, die jeweils einen sogenannten Jalousiekopf J zum Umsetzen einer Stückgutlage von einem Lagenaufgabetisch L zu einem Palettenbeladeplatz PL unabhängig gesteuert heben und senken können. Die Jalousieköpfe J sind an ihrer Unterseite mit bevorzugt steuerbaren Greiforganen (nicht dargestellt) für Zwischenlagen Z ausgestattet, z.B. Vakuumsaugnäpfen.

Um die Zwischenlagen Z unter einen im Bereich des Lagenaufgabetisches L an einem Lageneinschubplatz C bereit gehaltenen Jalousiekopf J positionieren zu können, ist ein Zwischenlagenförderer ZF vorgesehen. Das Einschieben einer Stückgutlage vom Lagenaufgabetisch L in den Jalousiekopf J erfolgt in bekannter Weise mit einem über den Lagenaufgabetisch gesteuert vor und zurück verfahrbaren Lagenschieber LS. Der Zwischenlagenförderer ZF erstreckt sich quer, bevorzugt senkrecht zur Zuführrichtung R des Lagenaufgabetisches L bis unter einen am Lageneinschubplatz C bereit stehenden Jalousiekopf. An zwei gegenüberliegenden Seiten des Zwischenlagenförderers befinden sich zwei Aufgabeplätze A und B für Zwischenlagenstapel, die auf Transportpaletten bereitgehalten werden und per Hubwagen oder Gabelstapler zuführbar sind. Quer über dem Zwischenlagenförderer ZF erstreckt sich vom Aufgabeplatz A bis zum gegenüberliegenden Aufgabeplatz B eine steuerbare Horizontalachse H für einen Zwischenlagengreifkopf G, der zudem gesteuert vertikal heb- und senkbar an dieser Horizontalachse geführt ist. Diese Konstruktion bildet insgesamt eine Zwischenlagen-Aufgabeeinrichtung zum Vereinzeln und Ablegen von Zwischenlagen Z auf dem Zwischenlagenförderer ZF, der diese dann taktweise im Wesentlichen senkrecht zur Zuführrichtung R unter einen am Lageneinschubplatz C bereit stehenden Jalousiekopf fördert, wo jeweils eine Zwischenlage pro Takt von diesem erfasst wird.

Im Normalbetrieb fährt der Zwischenlagengreiferkopf G von einem der beiden Aufgabeplätze A, B zum Zwischenlagenförderer auf einer im Wesentlichen hakenförmigen Umsetzbahn hin und her, bis der Stapel auf der Palette aufgebraucht ist. Wird dieser Zustand beispielsweise durch einen geeigneten Sensor bemerkt, wechselt der Zwischenlagengreiferkopf unverzüglich zum gegenüberliegenden Aufgabeplatz, an dem bereits eine volle Palette mit Zwischenlagen bereit steht und arbeitet nun diesen Stapel ab. In der Zwischenzeit kann der vorher frei gewordene Aufgabeplatz mit einem neuen Zwischenlagenstapel beschickt werden. Auf diese Weise ist eine unterbrechungsfreie Zwischenlagenversorgung gewährleistet, wodurch die Ausbringleistung der Palettiermaschine vorteilhafter Weise nicht geschmälert wird.

In nicht näher dargestellter Weise können die Zwischenlagenstapel an den Aufgabeplätzen A und B mit Hubeinrichtungen zum Nachführen der Stapeloberseite zu einer konstanten Abnahmeebene entsprechend dem Entnahmefortschritt bereitgehalten werden, wodurch die Taktzeit für den Zwischenlagentransfer zum Förderer ZF unabhängig von der momentanen Stapelresthöhe konstant gehalten werden kann.

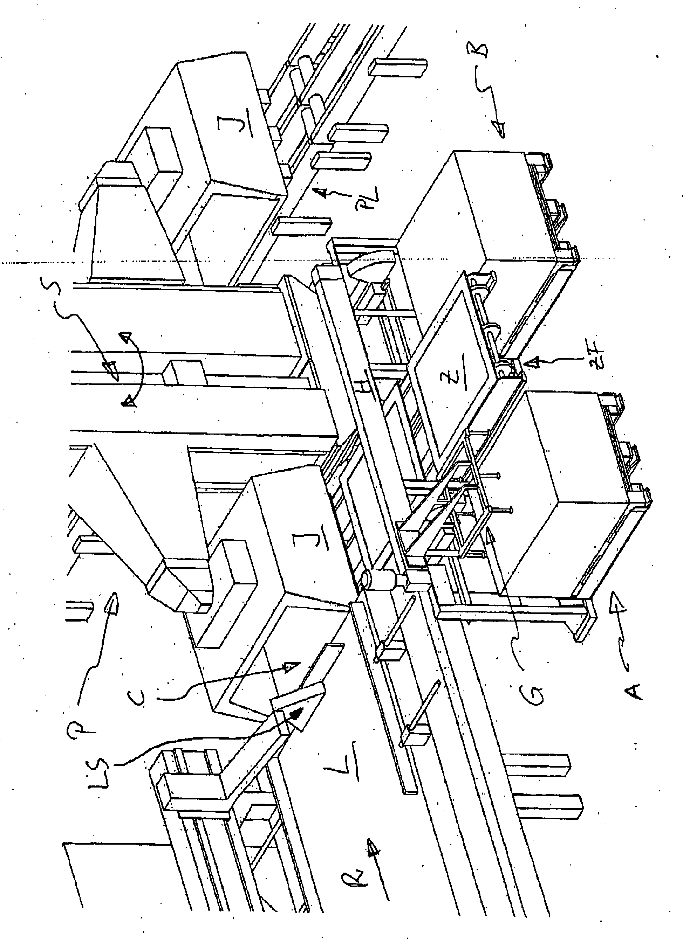

## Patentansprüche

1. Vorrichtung zum schichtweisen Palettieren von Stückgutlagen mit zwischen aufeinander gestapelten Stückgutlagen eingelegten Zwischenlagen (Z), mit
- einer Palettiervorrichtung (P) zum Palettieren von Stückgutlagen;
- wenigstens zwei Aufgabeplätzen (A, B) für Zwischenlagen (Z) im Bereich der Palettiervorrichtung (P);
- eine Zwischenlagen-Aufgabeeinrichtung zur Vereinzelung von zwischenlagen (Z) von einem der Aufgabeplätze (A, B) für Zwischenlagen (Z), wobei die Zwischenlagen-Aufgabeeinrichtung einen Zwischenlagengreifkopf (G) und eine Horizontalachse (H) zur Führung des Zwischenlagengreifkopfs (G) aufweist; und
- einem Zwischenlagenförderer (Z, F) zum Heranführen vereinzelter Zwischenlagen (Z) zur Palettiervorrichtung (P);
**dadurch gekennzeichnet, dass** die wenigstens zwei Aufgabeplätze (A, β) an gegenüberliegenden Seiten des Zwischenlagenförderers (ZF) angeordnet sind, dass sich die Horizontalachse (H) oberhalb des Zwischenlagenförderers (ZF) quer zu dessen Förderrichtung von einem Aufgabeplatz (A) bis zu einem gegenüberliegenden Aufgabeplatz (B) hinweg erstreckt, und dass die eine Zwischenlagen-Aufgabeeinrichtung so gesteuert wird, dass die Zwischenlagen (Z) wahlweise von einem der Aufgabeplätze (A, B) vereinzelt und auf dem Zwischenlagenförderer (ZF) abgelegt werden.

2. Vorrichtung nach Anspruch 1, **dadurch gekennzeichnet, dass** sich der zwischenlagenförderer (ZF) von der Zwischenlagen-Aufgabeeinrichtung (G, H) bis unter einen Lageneinschubplatz (C) erstreckt, bevorzugt senkrecht zur Zuführrichtung (R) eines an den Lageneinschubplatz (c) heranreichenden Lagenaufgabetisches (L), wobei ein Stückgutlage vom Lagenaufgabetisch (L) in einen am Lageneinschubplatz (C) bereit stehenden Jalousiekopf (J) einfahrbar ist, der an seiner Unterseite Greifwerkzeuge zum Erfassen einer Zwischenlage (Z) aufweist.

3. Vorrichtung nach wenigstens einem der vorhergehenden Ansprüche, **dadurch gekennzeichnet, dass** die Palettiervorrichtung (P) wenigstens eine vorzugsweise als Jalousiekopf (J) ausgebildete Lagenumsetzvorrichtung aufweist, die gesteuert entlang einer Vertikalachse höhenverfahrbar und um eine vertikale Drehachse von einem Lageneinschubplatz (C) zu einem Palettenbeladeplatz (PL) und zurück gesteuert drehbar ist.

## Claims

1. Device for palletising articles in layers with intermediate layers (Z) inserted between layers of articles stacked one on top of the other, comprising
- a palletiser (P) for palletising layers of articles;
- at least two feed stations (A, B) for intermediate layers (Z) in the region of the palletiser (P);
- an intermediate layer feeder for separating intermediate layers (Z) from one of the feed stations (A, B) for intermediate layers (Z), the intermediate layer feeder having an intermediate layer gripper head (G) and a horizontal axle (H) for guiding the intermediate layer gripper head (G), and
- an intermediate layer conveyor (Z, F) for advancing separated intermediate layers (Z) to the palletiser (P),
**characterised in that** the at least two feed stations (A, B) are arranged on opposing sides of the intermediate layer conveyor (ZF), that the horizontal axle (H) extends above the intermediate layer conveyor (ZF) transversely to the conveying direction thereof from one feed station (A) to an opposing feed station (B) and that the one intermediate layer feeder is controlled in such a manner that the intermediate layers (Z) are separated from one of the feed stations (A, B) as required and deposited on the intermediate layer conveyor (ZF).

2. Device according to claim 1, **characterised in that** the intermediate layer conveyor (ZF) extends from the intermediate layer feeder (G, H) to below a layer insertion station (C), preferably perpendicularly to the feed direction (R) of a layer feed table (L) extending as far as the layer insertion station (C), wherein a layer of articles can be moved from the layer feed table (L) into a roller-shutter head (J) ready at the layer insertion station (C) and provided on its underside with grippers for gripping an intermediate layer (Z).

3. Device according to at least one of the preceding claims, **characterised in that** the palletiser (P) has at least one layer transfer device preferably designed as a roller-shutter head (J), vertically adjustable in a controlled manner along a vertical axle and rotatable in a controlled manner about a vertical axis of rotation from a layer insertion station (C) to a pallet loading station (PL) and back again.

## Revendications

1. Dispositif de palettisation de colis par couches avec des couches intermédiaires (Z) insérées entre les colis empilés les uns sur les autres comportant :
- un dispositif de palettisation (P) permettant la palettisation de colis,
- au moins deux emplacements d'alimentation (A, B) des couches intermédiaires (Z) dans la zone du dispositif de palettisation (P),
- un dispositif de distribution de couches intermédiaires pour isoler des couches intermédiaires (Z) de l'un des emplacement d'alimentation (A, B) des couches intermédiaires (Z), ce dispositif de distribution de couches intermédiaires comportant une tête de préhension (G) des couches intermédiaires et un axe horizontal (H) permettant le guidage de cette tête de préhension (G) des couches intermédiaires, et
- un convoyeur (ZF) des couches intermédiaires permettant le transfert de couches intermédiaires isolées (Z) vers le dispositif de palettisation (P),
**caractérisé en ce que**
les emplacements d'alimentation (A, B) qui sont au moins au nombre de deux sont situés sur des côtés opposés du convoyeur des couches intermédiaires (ZF), l'axe horizontal (H) s'étend au-dessus du convoyeur des couches intermédiaires (ZF), transversalement à sa direction de transport d'un emplacement de chargement (A) jusqu'à un emplacement de chargement opposé (B), et l'un des dispositifs de distribution de couches intermédiaires est commandé de sorte que les couches intermédiaires (Z) puissent sélectivement être isolées de l'un des emplacements (A, B) et déposées sur le convoyeur de couches intermédiaires (ZF).

2. Dispositif conforme à la revendication 1,
**caractérisé en ce que**
le convoyeur de couches intermédiaires (ZF) s'étend du dispositif de distribution de couches intermédiaires (G, H) jusqu'au-dessous d'un emplacement de poussée des couches (C), de préférence perpendiculairement à la direction de transfert (R) d'une table d'alimentation de couches (L) atteignant l'emplacement de poussée des couches (C), un colis pouvant être transporté de la table d'alimentation (L) dans une tête à jalousies (J) déjà présente sur l'emplacement de poussée des couches (C), et qui comporte sur sa face inférieure un outil de préhension permettant de détecter une couche intermédiaire (Z).

3. Dispositif conforme à au moins l'une des revendications précédentes,
**caractérisé en ce que**
le dispositif de palettisation (P) comporte au moins un dispositif de déplacement des couches, de préférence réalisé sous la forme d'une tête à jalousies (J) pouvant être déplacé de façon commandée en hauteur le long d'un axe vertical et autour d'un axe de rotation vertical d'un emplacement de poussée des couches (C) à un emplacement de chargement sur une palette (PL) et inversement.
